Europäisches Patentamt

European Patent Office

Office européen des brevets

(19)

(11) Numéro de publication : **0 197 862**
**B1**

(12) ## FASCICULE DE BREVET EUROPÉEN

(45) Date de publication du fascicule du brevet :
28.09.88

(51) Int. Cl.⁴ : **B 29 D 31/00**, B 29 C 45/14

(21) Numéro de dépôt : **86400722.4**

(22) Date de dépôt : **03.04.86**

(54) **Procédé de moulage de bagues d'étanchéité.**

(30) Priorité : **03.04.85 FR 8505054**

(43) Date de publication de la demande :
**15.10.86 Bulletin 86/42**

(45) Mention de la délivrance du brevet :
**28.09.88 Bulletin 88/39**

(84) Etats contractants désignés :
**AT DE GB IT SE**

(56) Documents cités :
FR-A- 2 340 195
FR-A- 2 373 003
US-A- 3 063 097
US-A- 3 754 846

(73) Titulaire : **PROCAL, Société anonyme dite**
**Les Franchises**
**F-52200 Langres (FR)**

(72) Inventeur : **Saxod, Michel**
**Bourg**
**F-52200 Langres (FR)**
Inventeur : **Devouassoux, Serge**
**St Vallier**
**F-52200 Langres (FR)**
Inventeur : **Marchiset, Michel**
**Montlandon**
**F-52600 Chalindrey (FR)**
Inventeur : **Jaumot, Jean-Pierre**
**St Maurice**
**F-52200 Langres (FR)**

(74) Mandataire : **Nony, Michel et al**
**Conseil en Brevets d'Invention 29 rue Cambacérès**
**F-75008 Paris (FR)**

Jouve, 18, rue St-Denis, 75001 Paris, France

## Description

La présente invention est relative à un procédé de moulage de bagues d'étanchéité du type comportant une armature, une lèvre d'étanchéité adhérisée à ladite armature et formée d'un corps, notamment en élastomère, et d'une portée active d'étanchéité sous forme d'un revêtement en matériau à faible frottement, notamment en résine fluorée telle qu'en particulier le polytétrafluoréthylène (PTFE).

Des bagues d'étanchéité de ce type sont par exemple décrites dans le brevet français 1 508 575.

De nombreux procédés de moulage pour réaliser de telles bagues ont déjà été proposés et, à titre d'exemples, on peut citer les procédés décrits dans le EP-A-0 025 062 EP-A-0 113 663 et FR-A-2 373 003, sur lequel le préambule de la revendication 1 est basé.

Dans ces documents, l'on met en place, dans le moule, une armature, une rondelle de résine, notamment de PTFE, et au moins une préforme en élastomère après quoi l'on ferme le moule et l'on réalise la bague par application de chaleur et de pression, l'élastomère remplissant la cavité du moule. Après avoir sorti la bague du moule, on sectionne les parties de lèvre en excès et l'on met en place, dans le cas de bagues à étanchéité radiale, un ressort jarretière annulaire.

De telles procédures de moulage présentent pour premier inconvénient, de nécessiter un moulage préalable d'une ou de plusieurs préformes en élastomère, ce qui accroît les coûts de fabrication et rend difficile une automatisation du procédé.

Un autre inconvénient de ces procédures de moulage par compression provient du fait qu'il est difficile de contrôler avec précision la position, pendant le moulage, de la rondelle de PTFE, notamment pendant la phase de fermeture du moule du fait de la présence de la préforme en élastomère entre la rondelle et la paroi du moule.

La présente invention a pour objet de réaliser un procédé de moulage évitant les inconvénients des procédés antérieurs et qui de plus est rapide, économique, facilement automatisable et se prête à la réalisation d'une grande diversité de formes de bagues différentes.

Le procédé selon l'invention se caractérise par le fait que l'on met en place dans un moule ouvert une armature métallique et une rondelle annulaire de matériau à faible frottement, notamment en résine telle que le PTFE (matériau que l'on désignera par « résine » dans la suite), que l'on ferme le moule de manière à pincer directement, entre deux parties de moule en regard, la rondelle de résine sur une couronne d'une largeur comprise entre environ 30 et 70 % de la largeur de la rondelle, que l'on met sous vide la cavité intérieure du moule et l'on injecte dans celle-ci le matériau, notamment élastomère, destiné à réaliser la lèvre d'étanchéité, et que l'on sectionne la partie en excès de la lèvre après éjection de la bague de façon à inclure au moins la partie en couronne de la rondelle pincée lors de la fermeture du moule.

Dans un mode préféré de réalisation, l'injection du matériau destiné à former la lèvre d'étanchéité s'effectue par une pluralité de canaux excentrés répartis circonférentiellement sur la partie de moule opposée à celle dans laquelle sont mises en place l'armature et la rondelle de résine.

De préférence, les canaux d'injection sont disposés de manière à être décalés du bord extérieur de la partie en couronne pincée de la rondelle de résine pincée lors de la fermeture du moule d'une distance égale à au moins quatre fois l'épaisseur de ladite rondelle.

De préférence, selon l'invention l'on réalise le pincement de la rondelle de résine de manière à provoquer un écrasement de celle-ci d'une valeur comprise entre environ 3 et environ 9 % de l'épaisseur de la rondelle avant moulage.

Dans le but de mieux faire comprendre l'invention, on va maintenant décrire à titre d'exemple nullement limitatif un mode de réalisation en se référant au dessin annexé dans lequel :

— la figure 1 représente une vue schématique en demi-coupe d'un moule ouvert pour la mise en œuvre de la première phase du procédé selon l'invention,

— la figure 2 est une vue analogue à la figure 1 du moule fermé au cours d'une deuxième phase de mise en œuvre,

— la figure 3 est une vue analogue aux figures précédentes au cours de la phase d'injection,

— la figure 4 est une vue en demi-coupe d'une bague obtenue par mise en œuvre du procédé dans le moule des figures 1 à 3,

— la figure 5 est une vue analogue à la figure 4 d'une variante de bague réalisable selon l'invention, et

— la figure 6 est une vue analogue représentant un autre type de bague réalisable selon l'invention.

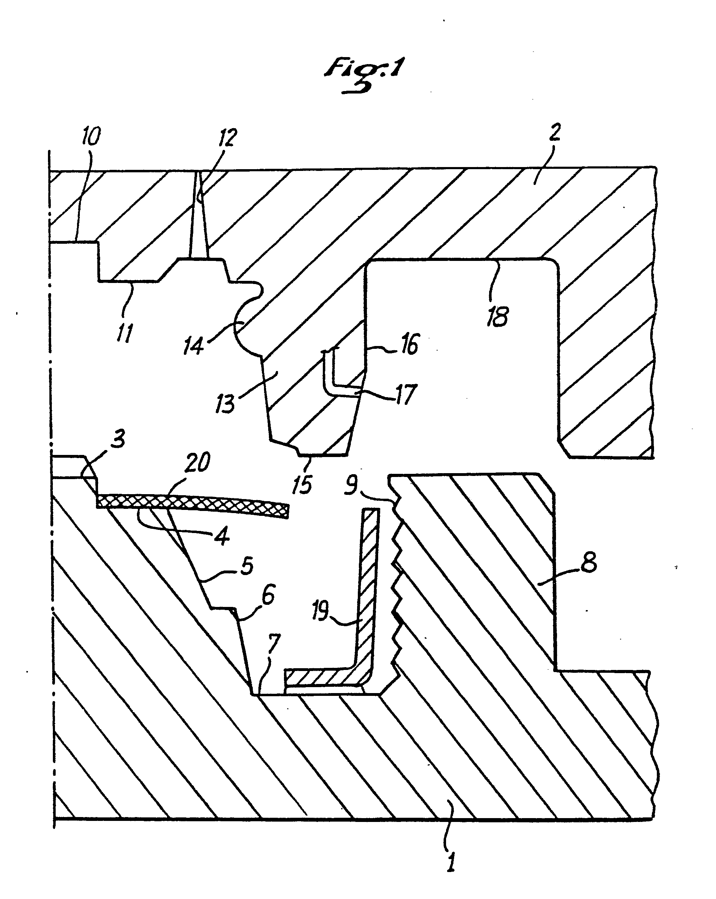

On se réfère tout d'abord aux figures 1 à 3.

On y voit un moule constitué d'une partie inférieure 1 et d'une partie supérieure 2.

La partie inférieure 1 comporte un tenon central 3, une portée annulaire horizontale 4, une paroi tronconique 5 comportant un décrochement 6 et une portée annulaire inférieure 7.

La partie inférieure 1 du moule comporte en outre une partie cylindrique 8 comportant une paroi cylindrique verticale 9 munie d'un profilage, dans l'exemple représenté.

La paroi tronconique 5 peut également être munie d'un profilage sous forme de motifs, en creux et/ou en relief, destinés à réaliser, de manière connue, une configuration de pompage hydrodynamique sur la portée d'étanchéité de la bague à réaliser.

La partie supérieure 2 du moule comporte un évidement cylindrique axial 10 de dimensions correspondant à celles du tenon 3 de la partie inférieure 1, une portée annulaire horizontale 11 en regard de la portée correspondante 4 de la partie inférieure 1 du moule, une pluralité de canaux d'injection 12 répartis circonférentiellement sur la partie de moule 2, la partie de moule comportant en outre une partie annulaire en saillie vers le bas 13 comportant dans sa paroi intérieure un décrochement en forme de bourrelet 14 destiné à réaliser dans la bague la gorge de réception d'un ressort jarretière, une portée inférieure horizontale 15 et une portée extérieure 16 au moins en partie cylindrique et dans laquelle débouche un conduit 17 apte à être relié en fonctionnement à une pompe à vide (non représentée).

La partie supérieure 2 du moule comporte en outre un évidement annulaire 18 correspondant à la partie 8 de la partie inférieure 1 du moule.

Pour la mise en œuvre du procédé selon l'invention, on dispose, comme illustré à la figure 1, dans le moule ouvert, d'une part une armature, généralement métallique, 19, et une rondelle de résine, notamment en PTFE, 20 centrée sur le tenon 3 et supportée par la portée annulaire horizontale 4.

La face supérieure de la rondelle 20 a, au préalable, été attaquée chimiquement pour réduire ses propriétés d'adhérence et permettre ainsi son adhésion au matériau destiné à former le corps de la lèvre d'étanchéité. Une telle attaque chimique est par exemple décrite dans le brevet allemand 33 29 386. La face supérieure 11, ainsi attaquée chimiquement, de la rondelle 2 peut également être revêtue d'un produit d'encollage.

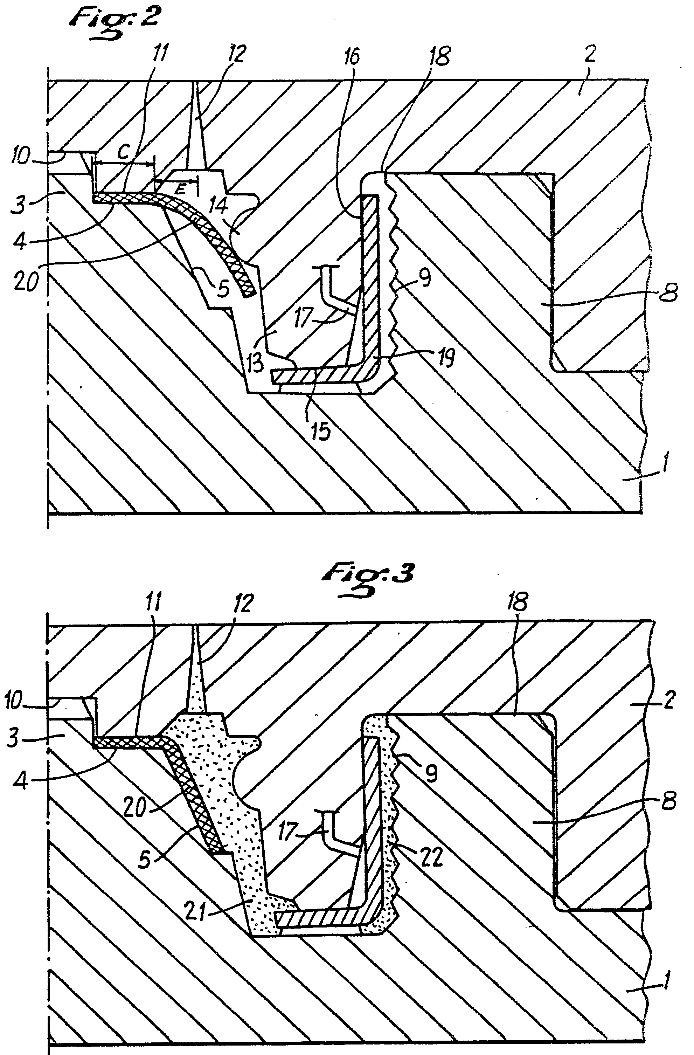

Dans la phase suivante du procédé selon l'invention, illustrée à la figure 2, on ferme le moule de manière à emprisonner et pincer à force la rondelle 20 entre les portées 4 et 11 en regard.

Le moule est agencé pour provoquer un pincement tel que la réduction d'épaisseur de la rondelle dans sa partie en couronne pincée lors de la fermeture du moule représente 3 à 9 % de l'épaisseur de la rondelle mise en place dans le moule.

Les portées 4 et 11 sont par ailleurs dimensionnées de telle manière que la rondelle de résine soit pincée sur une couronne C, qui pour des bagues usuelles, présente une largeur comprise entre environ 4 et 15 mm, de préférence de l'ordre de 9 mm.

Dans cette phase de fermeture du moule l'armature 19 est centrée et positionnée par la portée horizontale 15 et la paroi verticale 16.

On procède alors à l'injection par les canaux 12 d'un matériau tel qu'un élastomère destiné à réaliser, dans l'exemple illustré, le corps 21 de la lèvre de la bague d'étanchéité et le revêtement extérieur 22.

Les canaux d'injection 12 sont excentrés et la distance E mesurée radialement entre un canal d'injection et le bord extérieur de la portée de pincement 11 est égale de préférence à au moins quatre fois l'épaisseur de la rondelle de résine 20 avant son moulage.

Ainsi dans un mode particulier de réalisation où l'on utilise une rondelle de résine d'une épaisseur de 0,5 mm, la distance E est égale à 2 mm, la valeur de la largeur de la couronne C pincée de la rondelle est de 7 mm pour une largeur totale de rondelle de 16 mm.

Sous l'effet de la pression du matériau, notamment élastomère, injecté par les canaux 12, la partie non pincée de la rondelle 20 vient s'appliquer sur la paroi tronconique 5 de la partie inférieure 1 du moule dans une position parfaitement déterminée.

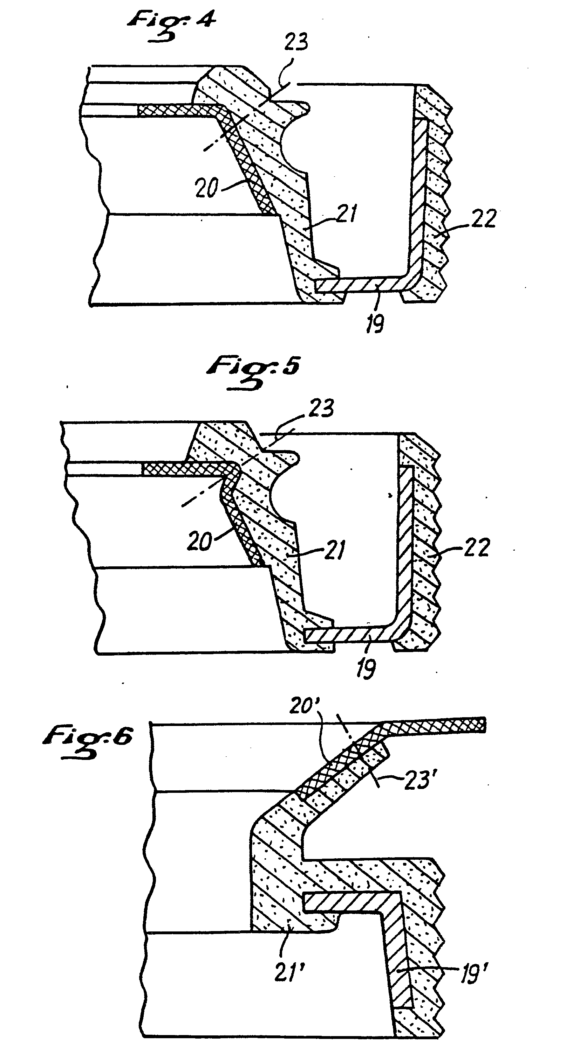

Après ouverture du moule et éjection on obtient la pièce telle qu'illustrée à la figure 4.

On élimine alors par tranchage comme schématisé en 23, et ce de manière conventionnelle, la partie de lèvre en excès.

Dans la variante illustrée à la figure 5 qui peut être obtenue avec le moule des figures 1 à 3 avec une simple modification de la forme de la paroi 5, on réalise directement une bague avec une arête d'étanchéité par formage dans le moule, le tranchage en 23 s'effectuant alors au-delà de la partie d'arête.

La figure 6 illustre une bague à lèvre axiale susceptible également d'être obtenue par le procédé selon l'invention, la bague étant, de la même manière, obtenue en mettant en place dans un moule conformé à cet effet l'armature 19' et, la rondelle de résine 20', moule dans lequel on réalise de la même manière que cele décrite en référence aux figures 1 à 3 l'injection du matériau 21' destiné à réaliser le corps de la lèvre d'étanchéité et dans l'exemple illustré également le revêtement extérieur de l'armature.

On comprend que selon l'invention on peut réaliser de nombreuses configurations de bagues permettant de réaliser des étanchéités radiales axiales ou externes.

Le procédé peut également être utilisé avec divers types de matériaux en ce qui concerne le corps de la lèvre d'étanchéité, et l'on peut notamment citer les élastomères de type nitrile, polyacrylate, silicone ou les élastomères fluorés.

Selon l'invention on peut également concevoir la réalisation du revêtement extérieur 22 (figures 4 et 5) en un matériau différent de celui constitutif de la lèvre 21, et ce en prévoyant une seconde série de canaux d'injection convenablement disposés.

Bien que l'invention ait été décrite en liaison avec un mode de réalisation particulier, il est bien évident qu'elle n'y est nullement limitée et qu'on peut lui apporter de nombreuses variantes et modifications sans pour autant sortir ni de son cadre ni de son esprit.

**Revendications**

1. Procédé de moulage de bagues d'étanchéité du type comportant une armature (19), une lèvre d'étanchéité adhérisée à ladite armature et formée d'un corps (21), notamment en élastomère, et d'une portée active d'étanchéité (20), sous forme d'un revêtement en matériau à faible frottement, notamment en résine fluorée telle qu'en particulier le polytétrafluoréthylène, dans lequel on introduit dans un moule (1, 2) une armature métallique, une rondelle annulaire de matériau à faible frottement et un matériau, notamment élastomère, destiné à former le corps de la lèvre d'étanchéité, et, une fois le moulage réalisé, on éjecte la bague moulée après ouverture du moule et on sectionne la partie en excès de la lèvre, caractérisé par le fait que l'on met en place dans le moule ouvert (1, 2) l'armature métallique (19) et la rondelle annulaire (20) de matériau à faible frottement, que l'on ferme le moule de manière à pincer directement entre deux parties de moule en regard (4, 11) la rondelle sur une largeur (C) comprise entre environ 30 et 70 % de la largeur de la rondelle, que l'on met sous vide la cavité intérieure du moule et l'on injecte dans celle-ci le matériau, notamment élastomère, destiné à réaliser le corps de la lèvre d'étanchéité (21), et que l'on sectionne la partie en excès de la lèvre après éjection de la bague de façon à inclure au moins la partie en couronne de la rondelle pincée lors de la fermeture du moule.

2. Procédé selon la revendication 1, caractérisé par le fait que l'injection du matériau destiné à former la lèvre d'étanchéité (21) s'effectue par une pluralité de canaux (12) excentrés répartis circonférentiellement sur la partie de moule (2) opposée à celle (1) dans laquelle sont mises en place l'armature (19) et la rondelle (20).

3. Procédé selon la revendication 2, caractérisé par le fait que les canaux d'injection (12) sont disposés de manière à être décalés du bord extérieur de la partie en couronne de la rondelle pincée lors de la fermeture du moule d'une distance égale à au moins quatre fois l'épaisseur de ladite rondelle.

4. Procédé selon l'une quelconque des revendications précédentes, caractérisé par le fait que l'on réalise le pincement de la rondelle de manière à provoquer un écrasement de celle-ci d'une valeur comprise entre environ 3 et environ 9 % de l'épaisseur de la rondelle avant moulage.

## Claims

1. Process for moulding seal rings of the kind comprising a frame (19), a sealing lip bonded to said frame and consisting of a body (21), particularly of elastomer material, and of an operative sealing bearing surface (20) in the form of a covering of low-friction material, particularly of a fluorinated resin such as in particular polytetrafluoroethylene, in which process a metal frame, an annular disc of low-friction material, and a material, particularly an elastomer material, intended to form the body of the sealing lip are introduced into a mould (1, 2) and, once the moulding has been effected, the moulded ring is ejected after the mould has been opened, and the excess portion of the lip is cut off, characterized by the fact that the frame (19) and the annular disc (20) of low-friction material are placed in position in the open mould (1, 2), the mould is closed in such a manner as to grip the disc between two facing parts (4, 11) of the mould over a width (C) amounting to between about 30 % and 70 % of the width of the disc, that the interior cavity of the mould is placed under vacuum, that the material, particularly elastomer material, intended to form the body of the sealing lip (21) is injected into said cavity, and that the excess portion of the lip is cut off, after ejection of the ring, in such a manner as to include at least the rim portion of the disc which was gripped on the closing of the mould.

2. Process according to Claim 1, characterized by the fact that the injection of the material intended to form the sealing lip (21) is effected through a plurality of eccentric channels (12) distributed circumferentially over the opposite mould part (2) to that part (1) in which the frame (19) and the disc (20) are placed in position.

3. Process according to Claim 2, characterized by the fact that the injection channels (12) are disposed in such a manner as to be offset from the outer edge of the rim portion of the disc, which is gripped on the closing of the mould, by a distance equal to at least four times the thickness of said disc.

4. Process according to any one of the preceding claims, characterized by the fact that the disc is gripped in such a manner as to crush it to an extent amounting to between about 3 % and about 9 % of the thickness of the disc before the moulding.

## Patentansprüche

1. Verfahren zum Formen von Dichtringen von der Art mit einem Armierungsteil (19), einer an dem Armierungsteil anhaftenden Dichtlippe, die gebildet ist aus einem Körper (21, insbesondere aus einem Elastomer, und einem aktiven Dichtbereich (20) in der Form eines Überzugs aus einem Material mit geringer Reibung, insbesondere aus einem fluorisierten Harz wie vor allem Polytetrafluorethylen, bei dem man ein metallisches Armierungsteil, eine ringförmige Scheibe aus einem Material mit geringer Reibung, insbesondere einem Elastomer, die zur Bildung des Körpers der Dichtlippe dient, in eine Form (1, 2) einführt und, nachdem der Formvorgang durchgeführt ist, den geformten Ring nach dem Öffnen der Form auswirft und den überschüssigen Bereich der Dichtlippe abschneidet, dadurch gekennzeichnet, daß man in die offene Form (1, 2) das metallische Armierungsteil (19) und die ringförmige Scheibe (20) aus dem Material mit geringer Reibung einlegt, daß man die Form derart schließt, daß die Scheibe auf einer Fläche (C) zwischen etwa 30 und 70 % der Größe der Scheibe direkt zwischen zwei gegenüberliegenden Bereichen (4, 11) der Form eingespannt ist, daß man in dem inneren Hohlraum der Form ein Vakuum herstellt und das Material, insbesondere ein Elastomer, zur Herstellung der Dichtlippe (21) einspritzt, und daß man den überschüssigen Bereich der Dichtlippe nach dem Auswerfen des Ringes derart abschneidet, daß wenigstens der ringförmige Teil der Scheibe, der beim Schließen der Form eingespannt war, mit abgeschnitten wird.

2. Verfahren nach Anspruch 1, dadurch gekennzeichnet, daß das Einspritzen des Materials zur Bildung der Dichtlippe (21) über eine Anzahl von Kanälen (12) erfolgt, die exzentrisch im Umfang verteilt auf dem Teil (2) der Form angeordnet sind, das dem Teil (1) gegenüberliegt, in dem das Armierungsteil (19) und die Scheibe (20) angeordnet sind.

3. Verfahren nach Anspruch 2, dadurch gekennzeichnet, daß die Einspritzkanäle (12) derart in bezug auf den äußeren Rand des ringförmigen Teils der Scheibe versetzt sind, der beim Schließen der Form eingespannt wird, daß der Abstand wenigstens der vierfachen Stärke der Scheibe entspricht.

4. Verfahren nach einem der vorhergehenden Ansprüche, dadurch gekennzeichnet, daß die Scheibe derart eingespannt wird, daß sie um etwa 3 bis etwa 9 % ihrer Stärke, bezogen auf die vorherige Form, eingedrückt wird.

## Fig.1

Fig. 2

Fig. 3

**Fig. 4**

**Fig. 5**

**Fig. 6**

3